# EUROPÄISCHE PATENTSCHRIFT

(11) **EP 1 894 777 B1**
(45) Veröffentlichungstag und Bekanntmachung des Hinweises auf die Patenterteilung: **31.03.2010**
(21) Anmeldenummer: 07015150.1
(22) Anmeldetag: 02.08.2007
(51) Int. Cl.: B60Q 3/02, F21V 7/09

(54) **Innenleuchte für Fahrzeuge**
Interior light for vehicles
Eclairage intérieur pour véhicules

(30) Priorität: 01.09.2006 DE 102006041293
(43) Veröffentlichungstag der Anmeldung: 05.03.2008
(73) Patentinhaber: Hella KGaA Hueck & Co., 59557 Lippstadt (DE)
(72) Erfinder: Zwick, Hubert, 70173 Stuttgart (DE); Müller, Bernd, 79650 Schopfheim (DE); Kuttler, Harald, 79692 Raich (DE)
(74) Vertreter: Huwer, Andreas

(56) Entgegenhaltungen:
- EP-A- 0 678 703
- DE-A1- 10 223 419
- DE-A1- 10 320 307
- DE-A1- 19 920 404
- DE-U1- 20 005 864

## Beschreibung

Die Erfindung betrifft eine Innenleuchte nach dem Oberbegriff von Anspruch 1.

Eine derartige Innenleuchte ist aus DE 200 05 864 U1 bekannt. Sie hat ein Leuchtmittel, das In einem in einem eine Lichtaustrittsöffnung aufweisenden Leuchtengehäuse abgeordnet ist Zwischen dem Leuchtmittel und der Lichtaustrittsöffnung ist ein als Abschirmreflektor dienendes, sphärisches Reflektorteil vorgesehen, das von dem Leuchtmittel In Richtung auf die Lichtaustrittsöffnung abgestrahltes Direktlicht zu dem Leuchtmittel zurückreflektiert. Im Abstrahlbereich des Leuchtmittels ist ferner ein Umlenkreflektor angeordnet, der das Licht zu der Lichtaustrittsöffnung ablenkt. Die Lichtaustrittsöffnung ist länglich ausgebildet und erstreckt sich mit ihrer Längserstreckung, ausgehend von einem zu dem Reflektorteil nahen Ende zu einem von dem Reflektorteil entfernten Ende. Der Umlenkreflektor weist mehrere In Richtung der Längserstreckung der Lichtaustrittsöffnung hintereinander angeordnete Facetten auf, die in einer durch die Hauptabstrahtrichtung des Reflektorteils und die Hauptabstrahlrichtung des Umlenkreflektors aufgespannten Ebene konvex ausgestaltet sind. Die Innenleuchte hat den Nachteil, dass sie eine relativ große Bauhöhe aufweist. Daher ist sie für einen Einbau in einen PKW, bei dem die Dachhöhe zur Erzielung eines niedrigen Luftwiderstandsbeiwerts reduziert ist, nur bedingt geeignet

Aus DE 100 52 862 A1 ist ferner eine Leseleuchte bekannt, die ein hinter einem Dachhimmel angeordnetes Leuchtengehäuse hat, an dem ein Lichtaustrittstubus angeordnet ist, der eine Öffnung im Dachhimmel durchdringt In dem Leuchtengehäuse ist ein Stufenreflektor angeordnet, der das von dem Leuchtmittel abgestrahlte Licht auf einen als Planspiegel ausgestalteten Umlenkreflektor bündelt. An diesem wird das Licht durch den Lichtaustrittstubus hindurch in den Innenraum des Fahrzeugs abgelenkt. Der Stufenreflektor hat mehrere konzentrisch zu seiner optischen Achse angeordnete Reflektorabschnitte, von denen ein innerer Reflektorabschnitt zur Bildung eines Lichtbündels mit etwa parallel zur optischen Achse des Reflektors verlaufenden Lichtstrahlen parabololdförmig ausgestaltet ist. Dabei entspricht der Durchmesser dieses Lichtbündels etwa dem Innendurchmesser des Lichtaustrittstubus. Zwei weiter außen befindliche Renektorabschnitte sind jeweils zur Bildung eines konvergenten Lichtbündels ausgestaltet, dessen Brennpunkt zwischen dem Lichtaustrittstubus und einer zu beleuchtenden Lesefläche dicht benachbart zu dem Lichtaustrittstubus angeordnet ist Die Leseleuchte hat sich In der Praxis vor allem deshalb bewährt, weil sie mittels eines kompakten Stufenreflektors durch einen eine relativ kleine Querschnittsfläche aufweisende Lichtaustrittstubus hindurch eine Lesefläche homogen beleuchtet Durch den Stufenreflektor ermöglicht die Leseleuchte außerdem eine geringe Bauhöhe. Als Innenleuchte Ist die Leuchte wegen des relativ kleinen beleuchteten Innenraumsegments Jedoch nur bedingt geeignet

Es besteht deshalb die Aufgabe, eine Innenleuchte der eingangs genannten Art zu schaffen, die trotz eines flachen, kompakten und kostengünstigen Aufbaus eine weitgehend homogene Beleuchtung des Fahrzeuglnnenraums ermöglicht.

Diese Aufgabe wird mit den Merkmalen des Anspruchs 1 gelöst In vorteilhafter Weise ermöglicht die Innenleuchte durch den Stufenreflektor und die längliche Lichtaustrittsöffnung eine flache Anordnung des Umlenkreflektors und somit einen sehr geringen Bauraum und eine geringe Einbauhöhe. Die Innenleuchte lässt sich dadurch platzsparend zum Beispiel in einen Dachhimmel oder ein Innenverkleldungstell eines Kraftfahrzeugs einbauen. Durch die Kombination des Stufenreflektors mit dem die konvexen Facetten aufwelsenden Umlenkreflektor ermöglicht die Innenleuchte trotz der kompakten Abmessungen ein weitgehend homogene Beleuchtung des Fahrzeug-Innenraums bzw. der darin befindlichen Inneneinrichtungstelle. Der Stufenreflektor und der Umlenkreftektor ermöglichen darüber hinaus eine indirekte Beleuchtung, bei welcher das Leuchtmittel für einen im Fahrzeuginnenraum befindlichen Benutzer nicht direkt sichtbar ist. Bei der Konstruktion der Innenleuchte kann durch entsprechendes Verkippen der Rotattonsparaboloide eine für eine homogene Beleuchtung des Innenraums günstige Projektion des von dem Leuchtmittel abgestrahlten Lichts auf den Umlenkreflektor erreicht werden.

Bei einer bevorzugten Ausgestaltung der Erfindung weist der Umlenkreflektor mehrere In Längserstreckung der Lichtaustrittsöffnung verlaufende Relhen mit Facetten auf, die quer zur Längserstreckung der Lichtaustrittsöffnung zueinander versetzt und vorzugsweise parallel zueinander angeordnet sind. Dadurch kann eine noch gleichmäßigere Beleuchtung des Innenraums erreicht werden. Zueinander benachbarte Facetten grenzen bevorzugt direkt aneinander an.

Vorteilhaft ist, wenn die Facetten mit ihrer Längserstreckungsrichtung quer und insbesondere rechtwinklig zur Längserstreckung der Lichtaustrittsöffnung und/oder in Form einer zweidimensionalen Matrix angeordnet sind, deren Spalten quer und insbesondere rechtwinklig zur Längserstreckung der Lichtaustrittsöffnung verlaufen. Die Innenleuchte ermöglicht dadurch ein schönes und hochwertiges Design.

Zweckmäßigerweise sind zumindest einige der Facetten kissenförmig ausgestaltet. Die auf die kissenförmigen Facetten auftretenden Lichtstrahlen des Leuchtmittels werden dann seitlich stärker abgelenkt, wodurch in dem Innenraum eine noch homogenere Lichtverteilung ermöglicht wird.

Die kissenförmigen Facetten sind bevorzugt in einer in Richtung der Längserstreckung der Lichtaustrittsöffnung verlaufenden Reihe angeordnet, wobei seitlich beidseits zu dieser Reihe jeweils mindestens eine Reihe mit im Wesentlichen zylindrischen Facetten vorgesehen ist, deren Zylinderachse quer zur Längserstreckung der Lichtaustrittsöffnung und vorzugsweise normal zur Hauptabstrahlrichtung des Umlenkreflektors verläuft. Dabei ist es sogar möglich, dass der Umlenkreflektor symmetrisch bezüglich einer Längsmittelebene ausgebildet ist, was ein noch schöneres Design der Innenleuchte ermöglicht, insbesondere wenn die Lichtaustrittsöffnung offen oder durch eine glasklare Lichtscheibe abgedeckt ist, so dass der Umlenkreflektor für einen in dem Fahrzeug-Innenraum befindlichen Benutzer sichtbar ist.

Bei einer vorteilhaften Ausführungsform der Erfindung weist mindestens eine Facette zumindest bereichsweise eine sägezahnartige Profilierung auf, die derart angeordnet ist, dass sie das darauf auftreffende Licht des Leuchtmittels quer zur Hauptabstrahlrichtung des Umlenkreflektors streuen. Der Fahrzeug-Innenraum wird dann noch homogener beleuchtet.

Zweckmäßigerweise ist die sägezahnartige Profilierung jeweils an einem dem Stufenreflektor zugewandten Endbereich der Facetten angeordnet und endet mit Abstand zu dem von diesem Endbereich entfernten Ende der Facetten. Die sägezahnartige Profilierung ist dann unauffällig und für den Benutzer kaum sichtbar in den Umlenkreflektor integriert. Der die sägezahnartige Profilierung aufweisende Endbereich der Facetten ist bevorzugt unter einem steileren Winkel zur Hauptabstrahlrichtung des Stufenreflektors angeordnet, als der diesem Endbereich gegenüberliegende Endbereich der Facetten, der keine sägezahnartige Profilierung aufweist. Dadurch kann trotz einer relativ kleinen profilierten Facetten-Oberfläche eine wirksame Lichtstreuung erreicht werden.

Besonders vorteilhaft ist, wenn der Stufenreflektor und der Umlenkreflektor zur Bildung eines Leuchtengehäuseteils einstückig miteinander verbunden sind, wenn die Lichtaustrittsöffnung an der Vorderseite des Leuchtengehäuseteils dem Umlenkreflektor gegenüberliegend angeordnet ist, wenn der Stufenreflektor an der Rückseite des Leuchtengehäuses eine einen Wandungsdurchbruch in dem in dem Leuchtengehäuseteil bildende Aussparung aufweist, und wenn das Leuchtengehäuseteil vorzugsweise derart ausgestaltet ist, dass es mit nur zwei Werkzeugformteilen durch Spritzgießen oder Stanzen herstellbar ist, von denen das eine Werkzeugformteil in die Lichtaustrittsöffnung und das andere Werkzeugformteil in den Wandungsdurchbruch einsetzbar ist. Das Leuchtengehäuseteil lässt sich dann kostengünstig in einer nur zwei Werkzeugformteil aufweisenden Spritzgussform im Spritzgussverfahren herstellen, wobei die Werkzeugformteile nach Beendigung des Spritzgussvorgangs auf einfache Weise entformt werden können. In einem weiteren Schritt können dann der Stufenreflektor und der Umlenkreflektor in entsprechender Weise aus zwei Richtungen mit einer reflektierenden Beschichtung bedampft werden.

Der Wandungsdurchbruch ist vorzugsweise lichtdicht mit einem Wärmeschutzblech abgedeckt. Die Innenleuchte kann dann als Leuchtmittel eine Glühlampe aufweisen und kann dennoch dicht benachbart zu wärmeempfindlichen Teilen, wie z.B. elektronischen Bauteilen, angeordnet werden.

Vorteilhaft ist, wenn das Wärmeschutzblech als optischer Reflektor derart ausgestaltet ist, dass es das darauf auftreffende Licht des Leuchtmittels derart in Richtung auf den Stufenreflektor ablenkt, dass das Licht an dem Stufenreflektor zu dem Umlenkreflektor und von diesem zu der Lichtaustrittsöffnung abgelenkt wird. Somit kann auch das zur Rückseite der Innenleuchte von dem Leuchtmittel abgestrahlte Licht für die Beleuchtung des Innenraums genutzt werden.

Bei einer bevorzugten Ausführungsform der Erfindung deckt der Stufenreflektor das Leuchtmittel derart ab, dass es unter einem Winkel zur Normalen auf die Erstreckungsebene der Lichtaustrittsöffnung, der kleiner ist als 30°, insbesondere kleiner als 40° und bevorzugt kleiner als 45° von einem der Lichtaustrittsöffnung zugewandten Fahrzeug-Innenraum aus nicht sichtbar ist. Der Innenraum wird dann indirekt von dem Leuchtmittel beleuchtet.

Nachfolgend ist ein Ausführungsbeispiel der Erfindung anhand der Zeichnung näher erläutert. Es zeigt:
- Fig. 1: einen Längsschnitt durch eine Innenleuchte für ein für ein Kraftfahrzeug, bei dem nur die in der Schnittebene befindlichen Teile dargestellt sind, wobei auch die Strahlengänge von drei Lichtstrahlen eingezeichnet sind,
- Fig. 2: eine Ansicht der Innenleuchte mit demontierter Lichtscheibe, und
- Fig. 3: einen Längsschnitt durch die beiden Reflektoren der Innenleuchte.

Eine Innenleuchte für Fahrzeuge hat als Leuchtmittel 1 eine Glühlampe, die in einem Leuchtengehäuse angeordnet ist. Im Abstrahlbereich des Leuchtmittels 1 ist ein Stufenreflektor 2 angeordnet, der mehrere, jeweils in der Oberfläche eines Rotationsparaboloids verlaufende fresnel-artige Reflektorbereiche 3 aufweist. Die Hauptabstrahlstelle des Leuchtmittels 1 ist in einem der Brennpunkte des Rotationsparaboloids angeordnet.

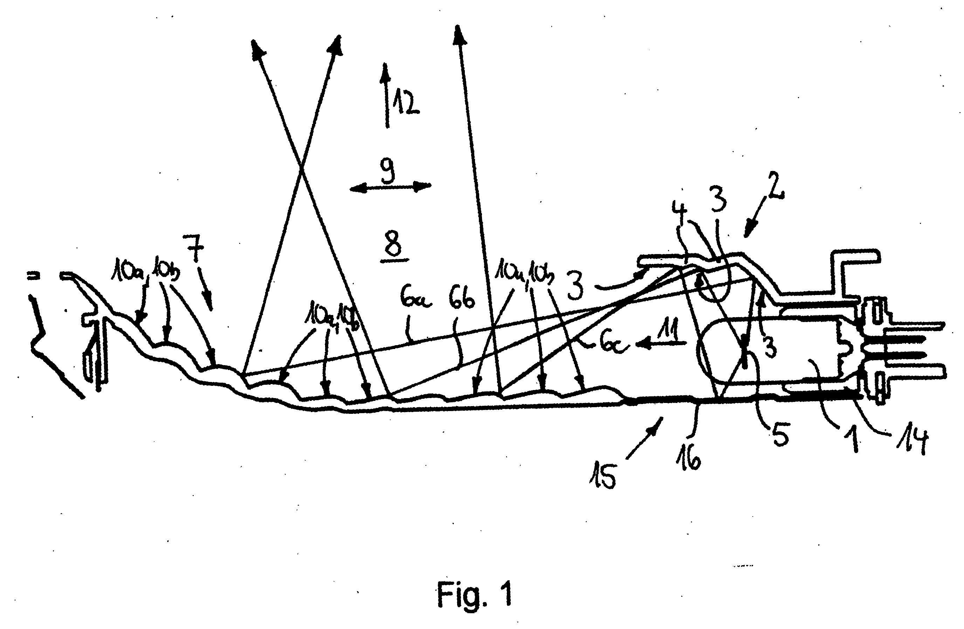

Die Reflektorbereiche 3 haben jeweils etwa die Form eines Ringsegments und sind durch zwischen den Reflektorbereichen 3 befindliche Stufen 4 oder Absätze einstückig miteinander verbunden. Die den Ringsegmenten zugeordneten Rotationsparaboloide haben denselben Brennpunkt 6, sind jedoch um den Brennpunkt 6 relativ zueinander verkippt. An den einzelnen Reflektorbereichen 3 wird das von dem Leuchtmittel 1 abgestrahlte, auf den betreffenden Reflektorbereich 3 auftreffende Licht jeweils zu einem Lichtbündel mit etwa parallel zueinander verlaufenden Lichtstrahlen gebündelt. Wie in Fig. 1 am Beispiel der Lichtstrahlen 6a, 6b erkennbar ist, verlaufen die betreffenden Lichtbündel in unterschiedliche Richtungen. Erwähnt werden soll noch, dass auch andere Ausführungsformen möglich sind, bei denen die parabolischen Reflektorbereiche 3 durch ebene Reflektorflächen angenähert sein können.

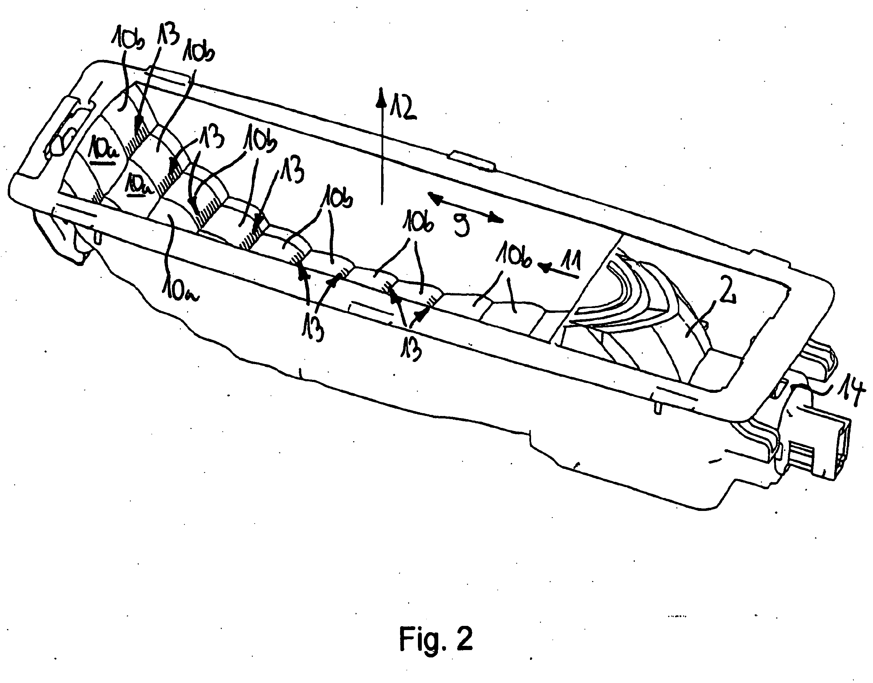

Im Abstrahlbereich des Stufenreflektors 2 ist ein Umlenkreflektor 7 angeordnet, an dem das von dem Stufenreflektor 2 gebündelte Licht durch eine Lichtaustrittsöffnung 8 hindurch in den Innenraum des Fahrzeugs abgelenkt wird. Wie in Fig. 2 besonders gut erkennbar ist, ist die Lichtaustrittsöffnung 8 länglich oder streifenförmig ausgebildet und verläuft mit ihrer Längserstreckung 9 von einem zu dem Stufenreflektor 2 nahen Ende zu einem von dem Stufenreflektor 2 entfernten Ende.

Der Umlenkreflektor 7 weist eine Vielzahl von matrixförmig in mehren Reihen und Spalten angeordneten Facetten 10a, 10a auf, die zumindest in einer durch die Hauptabstrahlrichtung 11 des Stufenreflektors 2 und die Hauptabstrahlrichtung 12 des Umlenkreflektors 7 aufgespannten, der Zeichenebene in Fig. 1 entsprechenden Ebene konvex ausgestaltet sind. Die Reihen verlaufen jeweils entlang einer gekrümmten Linie von dem einem zu dem Stufenreflektor 2 nahen Endbereich des Umlenkreflektors 7 zu einem von dem Stufenreflektor 2 entfernten Endbereich des Umlenkreflektors 7. Durch die konvexe Krümmung der Facetten 10a, 10b werden die an den Facetten 10a, 10b auftreffenden, die etwa parallel zueinander verlaufenden Lichtstrahlen aufweisenden Lichtbündel in Lichtbündel abgelenkt, die sich in der durch die Hauptabstrahlrichtung 11 des Stufenreflektors 2 und die Hauptabstrahlrichtung 12 des Umlenkreflektors 7 aufgespannten Ebene in Abstrahlrichtung aufweiten und dadurch eine homogene Beleuchtung erzeugen.

Wie in Fig. 2 besonders gut erkennbar ist, sind die in der mittleren Reihe angeordneten Facetten 10a kissenförmig ausgestaltet, d.h. sie sind sowohl in Richtung der längsten Richtung der Lichtaustrittsöffnung 8 als auch quer dazu jeweils konvex gekrümmt. An den kissenförmigen Facetten 10a wird das Licht des Leuchtmittels 1 auch seitlich abgelenkt. Die Facetten 10b der in den beiden beidseits dieser Facettenreihe vorgesehenen, benachbarten Facettenreihen sind im Wesentlichen zylindrisch oder rollenartig geformt. Die Zylinderachsen der Facetten 10b verlaufen quer zur Längserstreckung der Lichtaustrittsöffnung 8 und sind etwa parallel zueinander angeordnet.

Die in den beiden an die mittlere Facettenreihe angrenzenden Facettenreihen angeordneten Facetten 10b haben jeweils an einem dem Stufenreflektor 2 zugewandten, streifenförmigen Endbereich eine sägezahnartige Profilierung 13. Die Zähne der Profilierung 13 verlaufen etwa parallel zu der durch die Hauptabstrahlrichtung 11 des Stufenreflektors 2 und die Hauptabstrahlrichtung 12 des Umlenkreflektors 7 aufgespannten, der Zeichenebene in Fig. 1 entsprechenden Ebene. An der Profilierung 13 wird das Licht des Leuchtmittels quer zur Hauptabstrahlrichtung des Umlenkreflektors 7 gestreut, insbesondere in seitlicher Richtung. In Fig. 2 ist erkennbar, dass die Profilierung 13 mit Abstand zu dem von dem Stufenreflektor 2 entfernten Ende der Facetten 10b endet.

In Fig. 1 ist erkennbar, dass das Leuchtmittel 1 mittels einer Fassung 14 in eine Öffnung des Stufenreflektors 2 eingesetzt ist. Die elektrische Kontaktierung des Leuchtmittels 1 erfolgt an der Rückseite des Leuchtmittels 1.

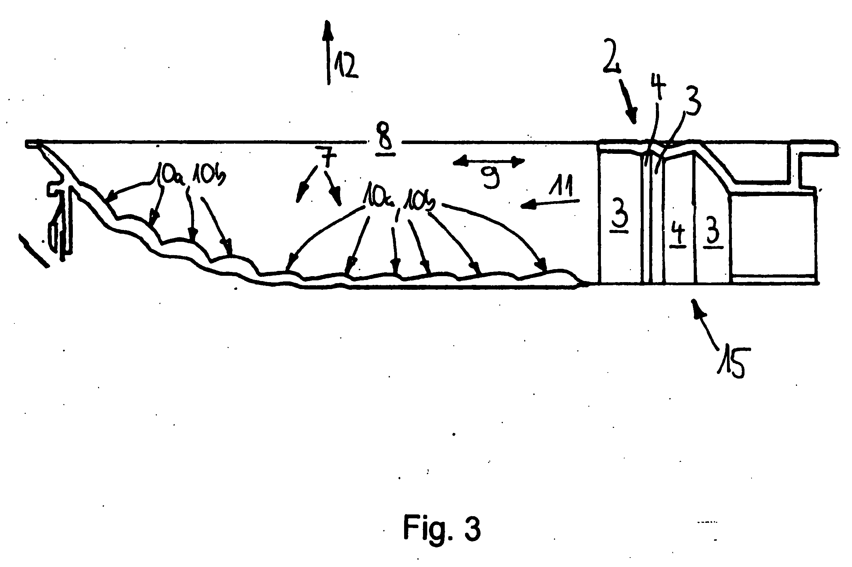

Wie in Fig. 3 erkennbar ist, sind der Stufenreflektor 2 und der Umlenkreflektor 7 zur Bildung eines Leuchtengehäuseteils als einstückig miteinander verbundenes Kunststoff Spritzgussteil ausgestaltet. Die Lichtaustrittsöffnung 8 ist an der Vorderseite des Leuchtengehäuseteils gegenüber von dem etwa schaufelförmigen Umlenkreflektor 7 angeordnet. Der Stufenreflektor 2 hat an der Rückseite des Leuchtengehäuses eine einen Wandungsdurchbruch 15 in dem in dem Leuchtengehäuseteil bildende Aussparung. Dadurch ist es möglich, das Leuchtengehäuseteil mit nur zwei aus dem Leuchtengehäuseteil entformbaren Werkzeugformteilen durch Spritzgießen herzustellen. Während des Spritzgießprozesses greift ein erstes Werkzeugteil in die Lichtaustrittsöffnung 8 und ein zweites Werkzeugteil in den Wandungsdurchbruch 15 ein. Nach der Entformung aus der Werkzeugform wird das Leuchtengehäuseteil aus zwei Richtungen mit einer optisch reflektierenden Beschichtung bedampft.

In Fig. 2 ist noch erkennbar, dass der Wandungsdurchbruch lichtdicht mit einem Wärmeschutzblech 16 abgedeckt ist. Das Wärmeschutzblech 18 ist als optischer Reflektor derart ausgestaltet, dass es das darauf auftreffende Licht des Leuchtmittels 1 in Richtung auf den Stufenreflektor 2, von dort zu dem Umlenkreflektor 7 und dann zu der Lichtaustrittsöffnung 8 abgelenkt wird (siehe Lichtstrahl 10c).

## Patentansprüche

1. Innenleuchte für Fahrzeuge, mit mindestens einem Leuchtmittel, einem diesem zugewandten Reflektorteil zum Bündeln des von dem Leuchtmittel (1) abgestrahlten Lichts, und einem im Abstrahlbereich des Reflektortells angeordneten Umlenkreflektor (7), der das Licht zu einer Lichtaustrittsöffnung (8) ablenkt, wobei die Lichtaustrittsöffhung (8) länglich ausgebildet ist und sich mit ihrer Längserstreckung (9) ausgehend von einem zu dem Reflektorteil nahen Ende zu einem von dem Reflektorteil entfernten Ende erstreckt, wobei der Umlenkreflektor (7) mehrere in Richtung der Längserstreckung (9) der Lichtaustrittsöffnung (8) hintereinander angeordnete Facetten (1 0a, 10b) aufweist, die zumindest in einer durch die Hauptabstrahlrichtung (11) des Reflektorteils und die Hauptabstrahlrichtung (12) des Umlenkreflektors (7) aufgespannten Ebene konvex ausgestaltet sind, **dadurch gekennzeichnet dass** das Reflektorteil als Stufenreflektor (2) ausgestaltet ist, der mehrere durch Stufen (4) oder Absätze miteinander verbundene Reflektorbereiche (3) aufweist, die jeweils in der Oberfläche eines Rotationsparaboloids liegen oder etwa tangential an eine solche angenähert sind, dass die Rotationsparaboloide einen gemeinsamen Brennpunkt (5) aufweisen und mit ihren Rotationsachsen um diesen Brennpunkt (5) relativ zueinander verkippt sind, und dass das Leuchtmittel (1) in diesem Brennpunkt (5) angeordnet ist.

2. Innenleuchte nach Anspruch 1, **dadurch gekennzeichnet, dass** der Umlenkreflektor (7) mehrere In Längserstreckung (9) der Lichtaustrittsöffnung verlaufende Reihen mit Facetten (10a, 10b) aufweist, die quer zur Längserstreckung (9) der Lichtaustrittsöffnung (8) zueinander versetzt und vorzugsweise parallel zueinander angeordnet sind.

3. Innenleuchte nach Anspruch 1 oder 2, **dadurch gekennzeichnet, dass** die Facetten (10a, 10b) mit ihrer Längserstreckungsrichtung quer und insbesondere rechtwinklig zur Längserstreckung (O) der Lichtaustrittsöffnung (8) und/oder in Form einer zweidimensionalen Matrix angeordnet sind, deren Spalten quer und insbesondere rechtwinklig zur Längserstreckung (O) der Lichtaustrittsöffnung (8) verlaufen.

4. Innenleuchte nach einem der Ansprüche 1 bis 3, **dadurch gekennzeichnet, dass** zumindest einige der Facetten (10a, 10b) kissenförmig ausgestaltet sind.

5. Innenleuchte nach Anspruch 4, **dadurch gekennzeichnet, dass** die kissenförmigen Facetten (10a) in einer in Richtung der Längserstreckung (9) der Lichtaustrittsöffnung (8) verlaufenden Reihe angeordnet sind und dass seittlich beidseits zu dieser Reihe jeweils mindestens eine Reihe mit im Wesentilchen zylindrischen Facetten (10b) vorgesehen ist deren Zylinderachse quer zur Längserstreckung (9) der Lichtaustrittsöffnung (8) und vorzugsweise normal zur Hauptabstrahlrichtung (12) des Umlenkreflektors (7) verläuft.

6. Innenleuchte nach einem der Ansprüche 1 bis 5, **dadurch gekennzeichnet, dass** mindestens eine Facette (10b) zumindest bereichsweise eine sägezahnartige Profillerung (13) aufweist, die derart angeordnet ist, dass sie das darauf auftreffende Licht des Leuchtmittels (1) quer zur Hauptabstrahlrichtung (12) des Umlenkreflektors (7) streuen.

7. Innenleuchte nach Anspruch 6, **dadurch gekennzeichnet, dass** die sägezahnartige Profilierung (13) jeweils an einem dem Stufenreflektor (2) zugewandten Endbereich der Facetten (10b) angeordnet ist und mit Abstand zu dem von diesem Endbereich entfernten Ende der Facetten (10b) endet.

8. Innenleuchte nach einem der Ansprüche 1 bis 7, **dadurch gekennzeichnet dass** der Stufenreflektor (2) und der Umlenkreflektor (7) zur Bildung eines Leuchtengehäuseteils einstückig miteinander verbunden sind, dass die Lichtaustrittsöffnung (8) an der Vorderseite des Leuchtengehäusetells dem Umlenkreflektor (7) gegenüberliegend angeordnet ist, dass der Stufenreflektor an der Rückselte des Leuchtengehäuses eine einen Wandungsdurchbruch (15) in dem Leuchtengehäuseteil bildende Aussparung aufweist, und dass das Leuchtengehäusetell vorzugsweise derart ausgestaltet ist, dass es mit nur zwei Werkzeugformteilen durch Spritzgießen oder Stanzen herstellbar ist, von denen das eine Werkzeugformteil in die Lichtaustrittsöffnung (8) und das andere Werkzeugformteil in den Wandungsdurchbruch (15) einsetzbar ist.

9. Innenleuchte nach Anspruch 8, **dadurch gekennzeichnet, dass** der Wandungsdurchbruch (15) vorzugsweise lichtdicht mit einem Wärmeschutzblech (16) abgedeckt ist.

10. Innenleuchte nach Anspruch 9, **dadurch gekennzeichnet, dass** das Wärmeschutzblech (16) als optischer Reflektor derart ausgestaltet ist, dass es das darauf auftreffende Licht des Leuchtmittels (1) derart In Richtung auf den Stufenreflektor (2) ablenkt, dass das Licht an dem Stufenreflektor (2) zu dem Umlenkreflektor (7) und von diesem zu der Lichtaustrittsöffnung (8) abgelenkt wird.

11. Innenleuchte nach einem der Ansprüche 1 bis 10, **dadurch gekennzeichnet dass** der Stufenreflektor (2) das Leuchtmittel (1) derart abdeckt, dass es unter einem Winkel zur Normalen auf die Erstreckungsebene der Lichtaustrittsöffnung (8), der kleiner Ist als 30°, insbesondere kleiner als 40° und bevorzugt kleiner als 45° von einem der Lichtaustrittsöffnung (8) zugewandten FahrzeugInnenraum aus nicht sichtbar ist.

## Claims

1. Interior light for vehicles, having at least one luminous means, a reflector part, facing the latter, for focusing the light emitted by the luminous means (1), and a deflecting reflector (7) which is arranged in the emission region of the reflector part and deflects the light to a light exit opening (8), the light exit opening (8) being of elongated design and extending with its longitudinal extent (9) in a fashion starting from an end near the reflector part to an end remote from the reflector part, the deflecting reflector (7) having a plurality of facets (10a, 10b) which are arranged sequentially in the direction of the longitudinal extent (9) of the light exit opening (8) and are of convex design, at least in a plane defined by the main emission direction (11) of the reflector part and the main emission direction (12) of the deflecting reflector (7), **characterized in that** the reflector part is designed as a stepped reflector (2) which has a plurality of reflector regions (3) which are connected to one another by steps (4) or shoulders and respectively lie in the surface of a paraboloid of revolution or approach such a paraboloid in an approximately tangential fashion, **in that** the paraboloids of revolution have a common focal point (5), and are tilted relative to one another with their rotational axes about said focal point (5), and **in that** the luminous means (1) is arranged at this focal point (5).

2. Interior light according to Claim 1, **characterized in that** the deflecting reflector (7) has a plurality of rows, running in the longitudinal extent (9) of the light exit opening, with facets (10a, 10b) which are offset from one another transverse to the longitudinal extent (9) of the light exit opening (8) and are preferably arranged parallel to one another.

3. Interior light according to Claim 1 or 2, **characterized in that** the facets (10a, 10b) are arranged with the direction of their longitudinal extents transverse, and in particular perpendicular, to the longitudinal extent (9) of the light exit opening (8), and/or in the form of a two-dimensional array whose columns run transverse, and in particular perpendicular, to the longitudinal extent (9) of the light exit opening (8).

4. Interior light according to one of Claims 1 to 3, **characterized in that** at least a few of the facets (10a, 10b) are of cushion-shaped design.

5. Interior light according to Claim 4, **characterized in that** the cushion-shaped facets (10a) are arranged in a row running in the direction of the longitudinal extent (9) of the light exit opening (8), and **in that** provided laterally on both sides of this row is in each case at least one row with substantially cylindrical facets (10b), the cylinder axis of which runs transverse to the longitudinal extent (9) of the light exit opening (8) and preferably normal to the main emission direction (12) of the deflecting reflector (7).

6. Interior light according to one of Claims 1 to 5, **characterized in that** at least one facet (10b) has at least in some regions a sawtooth-like profile (13) arranged in such a way that they scatter the light, incident thereon, of the luminous means (1) transverse to the main emission direction (12) of the deflecting reflector (7).

7. Interior light according to Claim 6, **characterized in that** the sawtooth-like profile (13) is respectively arranged on an end region, facing the stepped reflector (2), of the facets (10b) and ends at a spacing from the end of the facets (10b) which is remote from this end region.

8. Interior light according to one of Claims 1 to 7, **characterized in that** the stepped reflector (2) and the deflecting reflector (7) are connected to one another in one piece to form a light housing part, **in that** the light exit opening (8) is arranged at the front side of the light housing part opposite the deflecting reflector (7), **in that** the stepped reflector has at the rear side of the light housing a cutout which forms a wall perforation (15) in the light housing part, and **in that** the light housing part is preferably designed in such a way that it can be produced by injection moulding or stamping with the aid of only two die mould parts of which one die mould part can be inserted into the light exit opening (8) and the other die mould part can be inserted into the wall perforation (15).

9. Interior light according to Claim 8, **characterized in that** the wall perforation (15) is preferably covered in lightproof fashion by a heat protection plate (16).

10. Interior light according to Claim 9, **characterized in that** the heat protection plate (16) is designed as an optical reflector in such a way that it deflects the light, incident thereon, of the luminous means (1) in the direction of the stepped reflector (2) in such a way that the light on the stepped reflector (2) is deflected to the deflecting reflector (7) and from the latter to the light exit opening (8).

11. Interior light according to one of Claims 1 to 10, **characterized in that** the stepped reflector (2) covers the luminous means (1) in such a way that from a vehicle interior facing the light exit opening (8) it is not visible at an angle to the normal to the plane of extent of the light exit opening (8) which is smaller than 30°, in particular smaller than 40° and, preferably, smaller than 45°.

## Revendications

1. Eclairage intérieur pour véhicules, comprenant au moins un moyen d'éclairage, une partie de réflecteur tournée vers celui-ci pour rassembler en faisceau la lumière émise par le moyen d'éclairage (1), et un réflecteur déflecteur (7) disposé dans la région d'émission de la partie de réflecteur, qui dévie la lumière vers une ouverture de sortie de lumière (8), l'ouverture de sortie de lumière (8) étant réalisée sous forme allongée et s'étendant avec son étendue longitudinale (9) à partir d'une extrémité proche de la partie de réflecteur jusqu'à une extrémité éloignée de la partie de réflecteur, le réflecteur déflecteur (7) présentant plusieurs facettes (10a, 10b) disposées les unes derrière les autres dans la direction de l'étendue longitudinale (9) de l'ouverture de sortie de lumière (8), qui sont réalisées sous forme convexe au moins dans un plan formé par la direction d'émission principale (11) de la partie de réflecteur et la direction d'émission principale (12) du réflecteur déflecteur (7), **caractérisé en ce que** la partie de réflecteur est réalisée sous forme de réflecteur étagé (2) qui présente plusieurs régions de réflecteur (3) connectées les unes aux autres par des étages (4) ou des épaulements, qui se situent à chaque fois dans la surface d'un paraboloïde de révolution ou qui se rapprochent plus ou moins tangentiellement d'une telle surface, **en ce que** les paraboloïdes de révolution présentent un foyer commun (5) et sont basculés les uns par rapport aux autres avec leurs axes de rotation autour de ce foyer (5), et **en ce que** le moyen d'éclairage (1) est disposé au niveau de ce foyer (5).

2. Eclairage intérieur selon la revendication 1, **caractérisé en ce que** le réflecteur déflecteur (7) présente plusieurs rangées de facettes (10a, 10b) s'étendant dans l'étendue longitudinale (9) de l'ouverture de sortie de lumière, lesquelles sont décalées les unes par rapport aux autres transversalement à l'étendue longitudinale (9) de l'ouverture de sortie de lumière (8) et sont disposées de préférence parallèlement les unes aux autres.

3. Eclairage intérieur selon la revendication 1 ou 2, **caractérisé en ce que** les facettes (10a, 10b) sont disposées avec leur direction d'étendue longitudinale transversalement et notamment à angle droit par rapport à l'étendue longitudinale (9) de l'ouverture de sortie de lumière (8) et/ou en forme de matrice bidimensionnelle, dont les fentes s'étendent transversalement et notamment à angle droit par rapport à l'étendue longitudinale (9) de l'ouverture de sortie de lumière (8).

4. Eclairage intérieur selon l'une quelconque des revendications 1 à 3, **caractérisé en ce qu'**au moins certaines des facettes (10a, 10b) sont configurées en forme de coussin.

5. Eclairage intérieur selon la revendication 4, **caractérisé en ce que** les facettes en forme de coussin (10a) sont disposées dans une rangée s'étendant dans la direction de l'étendue longitudinale (9) de l'ouverture de sortie de lumière (8), et **en ce que** latéralement, de chaque côté de cette rangée, est prévue à chaque fois au moins une rangée avec des facettes (10b) essentiellement cylindriques, dont l'axe de cylindre s'étend transversalement à l'étendue longitudinale (9) de l'ouverture de sortie de lumière (8), et de préférence perpendiculairement à la direction d'émission principale (12) du réflecteur déflecteur (7).

6. Eclairage intérieur selon l'une quelconque des revendications 1 à 5, **caractérisé en ce qu'**au moins une facette (10b) présente au moins en partie un profilage en forme de dents de scie (13), qui est disposé de telle sorte qu'elles diffusent la lumière incidente du moyen d'éclairage (1) transversalement à la direction d'émission principale (12) du réflecteur déflecteur (7).

7. Eclairage intérieur selon la revendication 6, **caractérisé en ce que** le profilage en dents de scie (13) est disposé à chaque fois sur une région d'extrémité des facettes (10b) tournée vers le réflecteur étagé (2), et se termine à distance de l'extrémité des facettes (10b) éloignée de cette région d'extrémité.

8. Eclairage intérieur selon l'une quelconque des revendications 1 à 7, **caractérisé en ce que** le réflecteur étagé (2) et le réflecteur déflecteur (7) sont connectés d'une seule pièce l'un à l'autre pour former une partie de boîtier d'éclairage, **en ce que** l'ouverture de sortie de lumière (8) au niveau du côté avant de la partie de boîtier d'éclairage est disposée en face du réflecteur déflecteur (7), **en ce que** le réflecteur étagé présente, sur le côté arrière du boîtier d'éclairage, un évidement formant un orifice traversant la paroi (15) dans la partie de boîtier d'éclairage, et **en ce que** la partie de boîtier d'éclairage est configurée de préférence de telle sorte qu'elle puisse être fabriquée avec seulement deux parties moulées par moulage par injection ou par estampage, dont une partie moulée peut être insérée dans l'ouverture de sortie de lumière (8) et l'autre partie moulée peut être insérée dans l'orifice traversant la paroi (15).

9. Eclairage intérieur selon la revendication 8, **caractérisé en ce que** l'orifice traversant la paroi (15) est recouvert de préférence de manière opaque à la lumière avec une tôle de protection thermique (16).

10. Eclairage intérieur selon la revendication 9, **caractérisé en ce que** la tôle de protection thermique (16) est réalisée sous forme de réflecteur optique de telle sorte qu'elle dévie la lumière incidente du moyen d'éclairage (1) dans la direction du réflecteur étagé (2) de telle sorte que la lumière sur le réflecteur étagé (2) soit déviée vers le réflecteur déflecteur (7) et de ce dernier vers l'ouverture de sortie de lumière (8).

11. Eclairage intérieur selon l'une quelconque des revendications 1 à 10, **caractérisé en ce que** le réflecteur étagé (2) recouvre le moyen d'éclairage (1) de telle sorte qu'il ne puisse pas être visible suivant un angle par rapport à la normale au plan d'étendue de l'ouverture de sortie de lumière (8), qui est inférieur à 30°, notamment inférieur à 40°, et de préférence inférieur à 45°, depuis un habitacle du véhicule tourné vers l'ouverture de sortie de lumière (8).
